# EUROPEAN PATENT APPLICATION

(11) **EP 2 058 083 A1**
(43) Date of publication of application: **13.05.2009**
(21) Application number: 07792445.4
(22) Date of filing: 13.08.2007
(51) Int. Cl.: B23Q 1/70

(54) **MACHINING HEAD FOR MACHINE TOOL**

(30) Priority: 23.08.2006 JP 2006226221
(71) Applicant: TSUDAKOMA KOGYO KABUSHIKI KAISHA, Kanazawa-shi, Ishikawa-ken 921-8650 (JP)
(72) Inventor: TATSUDA, Yoshinori, TSUDAKOMA KOGYO KABUSHIKIKAISHA, Kanazawa-shi Ishikawa 9218650 (JP)
(74) Representative: Samson & Partner
(86) International application number: PCT/JP2007/065802
(87) International publication number: WO 2008/023588

(57) **Abstract**

A machining head (10) for a machine tool includes a spindle unit (20) to which a tool is attachable and a support head component (30, 60) that includes an index mechanism for indexing an angular position of a spindle (21). The index mechanism includes a drive motor (33, 63) supported by a bearing (35, 65) within the housing (31a, 61) of the support head component (30, 60) and a rotary joint (37, 67) disposed concentrically with the bearing (35, 65) and the drive motor (33, 63). The bearing (35, 65) is disposed within a range occupied by the drive motor (33, 63) in an axial direction of a support shaft (32, 37b, 62, 67c), and the rotary joint (37, 67) is disposed within the drive motor (33, 63) in a radial direction thereof.

## Description

### Technical Field

The present invention relates to machining heads for machine tools, and particularly, to a machining head equipped with an index mechanism, which is used in a compound processing machine (machine tool), such as a five-axis processing machine (that is, a processing machine capable of controlling five axes simultaneously) and a multi-face processing machine.

### Background Art

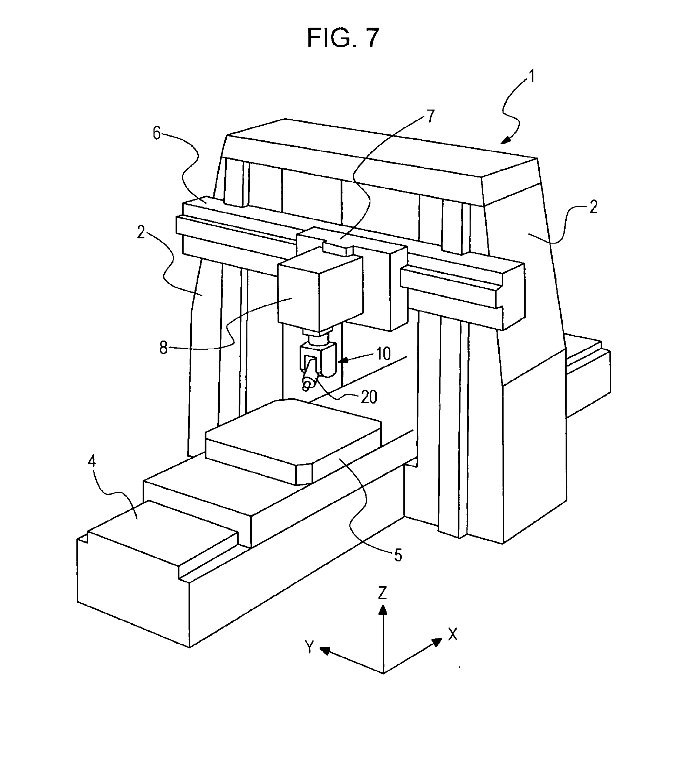

Fig. 7 illustrates a double-housing machine tool (machining center) 1 as an example of a compound processing machine. The double-housing machine tool 1 includes left and right columns 2, 2 attached to a bed 4, a cross rail 6 movable vertically (in Z-axis direction) on the columns 2, 2, a saddle 7 movable horizontally (in Y-axis direction) on the cross rail 6, a ram 8 movable in the Z-axis direction on the saddle 7, and a table 5 movable in the front-back direction (in X-axis direction) on the bed 4. Furthermore, the ram 8 has a machining head 10 attached thereto, which includes a spindle unit 20 equipped with a spindle to which a tool can be attached.

When machining a workpiece, the double-housing machine tool 1 moves the table 5, the cross rail 6, the saddle 7, and the ram 8, and the machining head 10 indexes the angular position of the spindle unit 20 in accordance with numerical control based on a preliminarily set program. Accordingly, in the machine tool, the tool can be set at appropriate angles for machining various surfaces of the workpiece so that the workpiece can be cut into complicated shapes.

In order to achieve this, the machining head is equipped with an index mechanism for indexing the angular position of the spindle unit. A machining head equipped with a drive motor of a direct-drive type (which will be referred to as a DD motor hereinafter) as means for driving the index mechanism is disclosed (for example, Patent Document 1). The DD motor includes a motor stator and a motor rotor that are disposed within a housing of the machining head 10, and the rotor is linked with a support shaft that supports the spindle unit. Generally, in a machining head of this type, the support shaft supporting the spindle unit is supported rotatably by a bearing within the housing of the machining head.

In such a machining head that supports the spindle unit, in order to properly supply machining fluid (which will simply be referred to as fluid hereinafter) to the spindle unit, there is case where a rotary joint is used so that a communication state of fluid channels can be maintained even when the spindle unit and the support shaft are rotated.
The fluid to be supplied to the spindle unit 20 is, for example, cooling oil for cooling the DD motor 33 or the spindle 21 that rotates at high speed, sealing air for preventing cutting chips and powder from entering the spindle unit 20 (i.e. the rotating portion of the spindle 21), and cooling water for cooling the rotating tool and the like used during the machining process.

In the machining head according to Patent Document 1, the bearing for rotatably supporting the support shaft (drive shaft) that supports the spindle unit is disposed outside of a range occupied by the DD motor in the axial direction of the support shaft. This results in a large dimension of the machining head in the axial direction of the support shaft, causing the machining head to be large in its overall size.

In the case of the double-housing machine tool described above, for example, a machining head having a large size will inevitably cause an increase in size of the machine tool to attain a sufficient movement range for the machining head or will limit the work space on the machine tool. In addition, an increase in weight due to the size increase can hinder the movement of the machining head and thus cause an adverse effect on the workability. Moreover, depending on the weight of the machining head, the cross beam can become bent, causing the machining accuracy to be deteriorated.
Patent Document 1: Japanese Unexamined Patent Application Publication No. 2-116437

### Disclosure of Invention

### Problems to be Solved by the Invention

Accordingly, it is an object of the present invention to provide a machining head for a machine tool equipped with an index mechanism, in which high machining accuracy can be achieved without having to increase the size of the machining head.

### Means for Solving the Problems

The present invention is directed to a machining head for a machine tool, which includes a spindle unit including a spindle to which a tool is attachable, and a support head component that supports the spindle unit, the support head component including an index mechanism that rotates the spindle unit at least about an axis line extending perpendicular to a rotary axis line of the spindle in order to index an angular position of the spindle unit.

The present invention is **characterized in that** the index mechanism includes a support shaft fixed to the spindle unit and rotatably supported by a bearing within a housing of the support head component, a drive motor including a motor rotor and a motor stator, the drive motor being disposed concentrically with the support shaft and surrounding the support shaft within the housing of the support head component, and a rotary joint disposed concentrically with the bearing and the drive motor. Moreover, the bearing is disposed within a range occupied by the drive motor in an axial direction of the support shaft, and the rotary joint is disposed within the drive motor in a radial direction thereof.

In the present invention, the bearing may be disposed within the motor rotor of the drive motor in the radial direction thereof. Furthermore, the rotary joint may be disposed within the bearing in a radial direction thereof. Advantages

According to the machining head for the machine tool in the present invention, the bearing for rotatably supporting the support shaft is disposed within the range occupied by the DD motor in the axial direction of the support shaft.
In addition, the rotary joint is disposed within the motor rotor of the DD motor in the radial direction thereof. Accordingly, this prevents the dimension of the machining head in the axial direction of the support shaft from increasing, thereby avoiding an increase in the overall size of the machining head. This advantageously prevents size increase of the machine tool and deterioration of the machining accuracy.

### Brief Description of Drawings

[Fig. 1] Fig. 1 is a front partially-cutaway view of a support head component included in a machining head according to a first embodiment of the present invention.
[Fig. 2] Fig. 2 includes side views of the support head component in the machining head according to the first embodiment.
[Fig. 3] Fig. 3 is a front partially-cutaway view of the machining head according to the first embodiment.
[Fig. 4] Fig. 4 shows partially-cutaway views illustrating modified examples of the support head component according to the first embodiment.
[Fig. 5] Fig. 5 shows partially-cutaway views illustrating modified examples of the support head component according to the first embodiment.
[Fig. 6] Fig. 6 is a front partially-cutaway view of a support head component included in a machining head according to a second embodiment of the present invention.
[Fig. 7] Fig. 7 is a perspective view showing an example of a machine tool to which the machining head according to the present invention is applied.

### Reference Numerals

1 machine tool
10 machining head
20 spindle unit
21 spindle
25 DD motor
25a rotor
25b stator
30 head component (first support head component)
30a, 30b leg segment
30c supporting segment
31a, 31b housing
32 rotary shaft
33 DD motor
33a rotor
33b stator
34 clamp mechanism
34a clamp sleeve
35, 36 bearing
37 rotary joint
37a distributor
37b shaft
38 rotary joint
38a distributor
38b shaft
39 rotary shaft
41, 44 rotation detector
41a, 44a detector stator
41b, 44b detector rotor
50 second support head component
51 housing
52 rotary shaft
53 DD motor
53a stator
53b rotor
54 clamp sleeve
55 distributor
56 bearing (triple cylindrical roller bearing)
60 support head component
61 housing
62 rotary shaft
63 DD motor
63a stator
63b rotor
65 bearing
67 rotary joint
67a, 67b distributor
67c shaft
68 rotation detector
70 bearing holder
70a1 cylindrical portion
70a2 flange portion
70a4 through hole
70b braking member
70c screw member
71 supporter

### Best Modes for Carrying Out the Invention

Embodiments of the present invention will now be described with reference to the drawings.

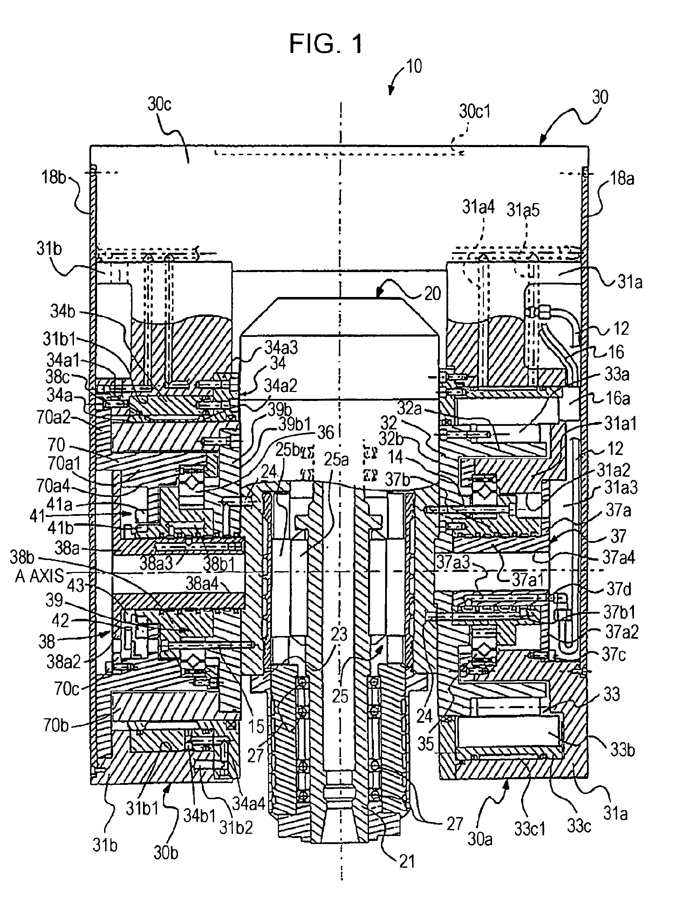

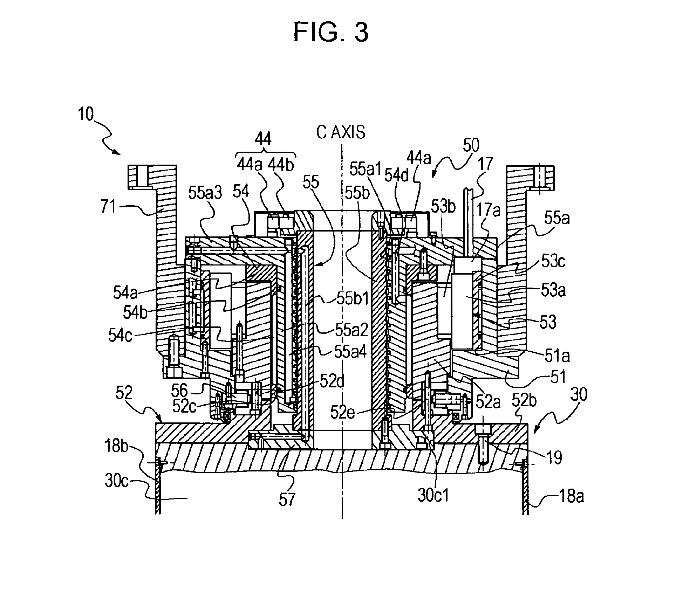

Figs. 1 to 3 illustrate a first embodiment of the present invention. A machining head 10 includes a spindle unit 20 having a spindle 21 to which a tool can be attached, a first support head component 30 that supports the spindle unit 20, and a second support head component 50 that supports the first support head component 30 (Fig. 3). The first support head component 30 (corresponding to a support head component according to the present invention) has the shape of a fork in which a pair of leg segments 30a, 30b is joined to a supporting segment 30c. The spindle unit 20 is supported between the leg segments 30a, 30b. One of the leg segments 30a, 30b is provided with a DD motor 33 (corresponding to a drive motor according to the present invention) for rotating the spindle unit 20.

The spindle unit 20 is a spindle head having a drive motor 25 built therein, and the built-in drive motor 25 rotates the spindle 21 at high speed.

A housing 23 of the spindle unit 20 has the spindle 21 extending therethrough and accommodates a drive motor 25 that surrounds the spindle 21. The drive motor 25 includes a rotor 25a fitted around the spindle 21, and a stator 25b facing an outer periphery surface of the rotor 25a. The spindle 21 is rotatably supported by a plurality of bearings 27, such as angular contact bearings, arranged in a front-back direction of the drive motor 25, that is, in the vertical direction in the figure. When an exciting current is supplied to the stator 25b, an excitation force is generated between the rotor 25a and the stator 25b. The rotor 25a rotates in response to the excitation force, whereby the spindle 21 is rotated.

In addition to supporting the spindle unit 20, the first support head component 30 has a function of rotating the spindle unit 20 around an axis line (referred to as an A axis hereinafter) extending perpendicular to a rotary axis line of the spindle 21 in order to index the angular position of the spindle unit 20.

As mentioned above, the first support head component 30 has the shape of a fork in which the pair of leg segments 30a, 30b is joined to the supporting segment 30c. Each of the leg segments 30a, 30b contains therein a rotatable support shaft that supports the spindle unit 20. Moreover, in the first support head component 30, the DD motor 33 for rotating the spindle unit 20 is provided only in the leg segment 30a of the two leg segments 30a, 30b. Accordingly, regarding the support shafts in the respective leg segments 30a, 30b, the support shaft in the leg segment 30a will be referred to as a driving support shaft (corresponding to a support shaft according to the present invention) hereinafter, whereas the support shaft in the leg segment 30b will be referred to as a driven support shaft hereinafter.

The configuration of the leg segment 30a will be described in detail below.

The leg segment 30a has a housing 31a as a main body. The housing 31a accommodates, for example, a rotor (motor rotor) 33a and a stator (motor stator) 33b that constitute a DD motor 33, the driving support shaft that supports the spindle unit 20, a bearing 35 such as a cross roller bearing for rotatably supporting the driving support shaft, and a rotary joint 37 for supplying fluid to the spindle unit 20.

A side of the housing 31a proximate to the leg segment 30b has a large opening through which the DD motor 33 and a rotary shaft 32 to be described below are inserted. Moreover, the housing 31a also has a cylindrical portion 31a1 extending along the A axis from a side surface of the housing 31a farthest from the leg segment 30b. The cylindrical portion 31a1 has a through hole 31a2 through which the rotary joint 37 extends.

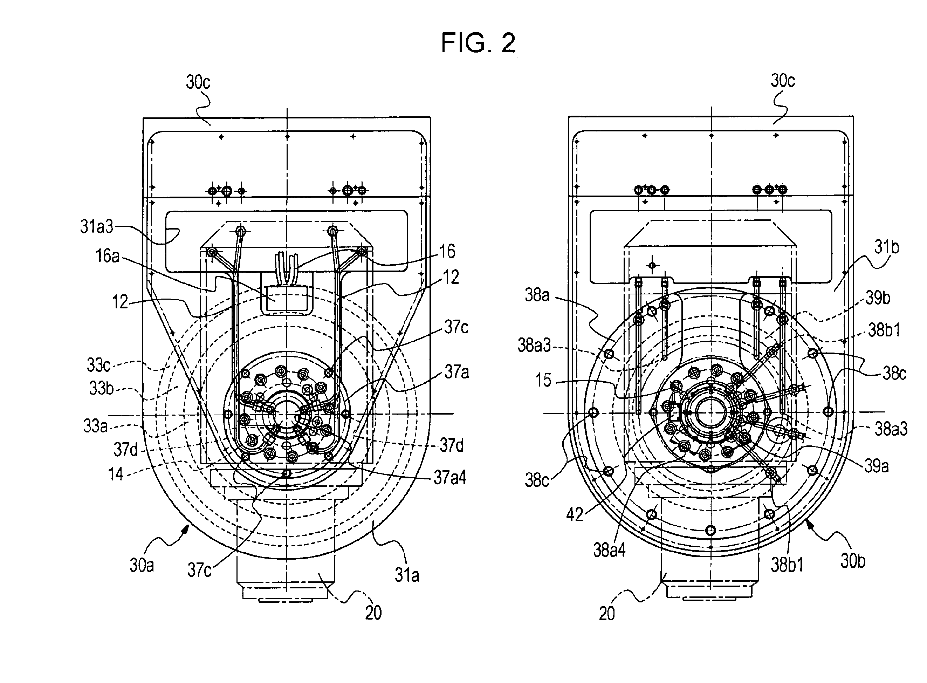

The side surface of the housing 31a farthest from the leg segment 30b has a recess 31a3 through which a fluid-supply pipe and a current-supply cable to be described below extend. A side of the leg segment 30a farthest from the leg segment 31b has a side-surface cover 18a attached thereto. The side-surface cover 18a covers the recess 31a3. Fig. 2 shows a state where the side-surface cover 18a is removed.

The rotary joint 37 includes a distributor 37a fixed to the housing 31a and a shaft 37b rotatably fitted around a cylindrical portion 37a1 of the distributor 37a.

In a state where the distributor 37a extends through the through hole 31a2 of the housing 31a, a flange portion 37a2 of the distributor 37a is attached to the housing 31a with a plurality of screw members 37c arranged in a circumferential direction. Furthermore, the center of the distributor 37a is provided with a through hole 37a4 through which, for example, cables can extend toward the spindle unit 20.

The distributor 37a also has a plurality of fluid channels 37a3 that are arranged at different positions in the circumferential direction. The fluid channels 37a3 are provided for supplying or discharging fluid. On the other hand, the shaft 37b has a plurality of fluid channels 37b1 that correspond to the fluid channels 37a3 of the distributor 37a. In Fig. 1, only one of the fluid channels 37a3 and one of the fluid channels 37b1 are representatively shown.

The fluid channels 37a3 and the fluid channels 37b1 corresponding thereto communicate with each other through annular grooves extending around an engagement surface between the distributor 37a and the shaft 37b. This communication state is maintained even upon rotation of the shaft 37b. Furthermore, each of the fluid channels 37b1 communicates with a fluid supply or discharge port 24 of the spindle unit 20. The distributor 37a and the shaft 37b have seal members interposed therebetween for attaining a sealed state between the annular grooves.

The distributor 37a also has a plurality of fluid supply or discharge ports 37d arranged at different positions in the circumferential direction. Each of the ports 37d is connected to a fluid supply or discharge pipe 12. Fluid supplied from a supply pipe 12 is transferred from the rotary joint 37 to the spindle unit 20 through the corresponding port 24. When the fluid is subject to circulation, the fluid circulating within the spindle unit 20 is discharged to a discharge pipe 12 via the rotary joint 37.

The DD motor 33 is constituted by the stator 33b secured to the housing 31a and the rotor 33a disposed facing an inner periphery surface of the stator 33b. Specifically, the DD motor 33 shown in the drawings is an inner-rotor-type motor.

The stator 33b is fitted within an inner periphery surface of a stator sleeve 33c fixed to the housing 31a.
The stator sleeve 33c has an annular groove 33c1 around an outer periphery surface thereof. On the other hand, the housing 31a has a fluid supply path 31a4 and a fluid discharge path 31a5 that communicate with the annular groove 33c1. A cooling fluid, such as oil, for cooling the DD motor 33 is supplied from the fluid supply path 31a4 towards the annular groove 33c1 so as to reduce heat generated by the DD motor 33 due to the rotation of the rotor 33a. Although not shown specifically in the drawings, the annular groove 33c1 has a helical shape so that when fluid is supplied from the fluid supply path 31a4, the fluid circulates the annular groove 33c1 so as to be discharged from the fluid discharge path 31a5.

The rotor 33a is fitted around an outer periphery surface of a rotary shaft 32 rotatably disposed within the housing 31a. The rotary shaft 32 is disposed concentrically with a rotary axis line of the shaft 37b of the rotary joint 37 and is fixed to the shaft 37b with a plurality of screw members arranged in the circumferential direction. The rotor 33a is disposed such that its outer periphery surface faces the inner periphery surface of the stator 33b. The rotor 33a is fitted around an outer periphery surface of a cylindrical portion 32a of the rotary shaft 32 in a relatively non-rotatable manner with respect to the rotary shaft 32.

An end surface 32b of the rotary shaft 32 proximate to the leg segment 30b has the spindle unit 20 fixed thereto with a plurality of screw members 14 arranged in the circumferential direction. In other words, the spindle unit 20 is fixed to the end surface 32b of the rotary shaft 32 so as to be supported by the rotary shaft 32. Consequently, in the leg segment 30a, the rotary shaft 32 and the shaft 37b of the rotary joint 37 rotating together with the rotary shaft 32 constitute the driving support shaft for the spindle unit 20.

In a state where the rotary shaft 32 is joined to the shaft 37b of the rotary joint 37, the cylindrical portion 32a of the rotary shaft 32 surrounds the cylindrical portion 31a1 of the housing 31a with a slight gap therebetween. In other words, in a state where the rotary shaft 32 is joined to the shaft 37b, the cylindrical portion 31a1 of the housing 31a is disposed within the inner periphery surface of the cylindrical portion 32a having the rotor 33a of the DD motor 33 fitted therearound, as viewed in the radial direction of the cylindrical portion 32a.

On the other hand, the through hole 31a2 provided in the cylindrical portion 31a1 of the housing 31a has disposed therein the cylindrical portion 37a1 of the distributor 37a and the shaft 37b, which are the main components of the rotary joint 37. Moreover, the cylindrical portion 31a1 of the housing 31a and the shaft 37b of the rotary joint 37 have the bearing 35 interposed therebetween, which rotatably supports the shaft 37b with respect to the housing 31a.

Accordingly, the rotary joint 37 related to the driving support shaft (i.e. the shaft 37b of the rotary joint 37 and the rotary shaft 32) rotated by the DD motor 33 and the bearing 35 for rotatably supporting the driving support shaft with respect to the housing 31a are both disposed within the DD motor 33 in the radial direction thereof. As shown in the drawings, the positioning of the bearing 35 in the A-axis direction is within a range occupied by the DD motor 33 in the A-axis direction.

The configuration of the leg segment 30b that supports the spindle unit 20 at a position opposite to the leg segment 30a will be described in detail below.

The leg segment 30b has a housing 31b as a main body. The housing 31b accommodates, for example, a clamp mechanism 34 for maintaining an angular position of the spindle unit 20, the driven support shaft that supports the spindle unit 20, a bearing 36 for rotatably supporting the driven support shaft, and a rotary joint 38.

The housing 31b has a through hole 31b1 extending in the A-axis direction. The clamp mechanism 34, the driven support shaft, the bearing 36, and the rotary joint 38 are fitted within this through hole 31b1. A side surface of the housing 31b farthest from the leg segment 30a has a recess (not shown) like that provided in the leg segment 30a. The recess is covered with a side-surface cover 18b.

The rotary joint 38 is similar to the rotary joint 37 in the leg segment 30a, and includes a distributor 38a fixed to a cylindrical portion 70a1 of a bearing holder 70 and a shaft 38b rotatably fitted to a peripheral portion of the distributor 38a.

The distributor 38a is inserted into a through hole 70a4 in the bearing holder 70, and a flange portion 38a2 of the distributor 38a is joined to the bearing holder 70 with a plurality of screw members 70c arranged in the circumferential direction. Furthermore, the center of the distributor 38a is provided with a through hole 38a4 which allows a cable or the like to extend therethrough toward the spindle unit 20.

The distributor 38a has a plurality of fluid channels 38a3 that are arranged at different positions in the circumferential direction. The fluid channels 38a3 are provided for supplying or discharging fluid. The shaft 38b has a plurality of fluid channels 38b1 that correspond to the fluid channels 38a3 of the distributor 38a. In Fig. 1, only one of the fluid channels 38a3 and one of the fluid channels 38b1 are representatively shown.

The fluid channels 38a3 and the fluid channels 38b1 corresponding thereto communicate with each other through annular grooves extending around an engagement surface between the distributor 38a and the shaft 38b. This communication state is maintained even upon rotation of the shaft 38b. Furthermore, the fluid channels 38b1 communicate with the fluid supply or discharge port 24 of the spindle unit 20. The distributor 38a and the shaft 38b have seal members interposed therebetween for attaining a sealed state between the annular grooves.

The bearing holder 70 includes the above-described cylindrical portion 70a1, and a flange portion 70a2 extending outward radially from an end of the cylindrical portion 70a1 farthest from the leg segment 30a. The flange portion 70a2 of the bearing holder 70 is joined to the housing 31b with a plurality of screw members 38c arranged in the circumferential direction. Furthermore, the center of the bearing holder 70 is provided with a through hole 70a4 extending in the A-axis direction.

The leg segment 30b includes a rotary shaft 39 that corresponds to the rotary shaft 32 in the leg segment 30a. The rotary shaft 39 is constituted by a flange member 39b and the shaft 38b of the rotary joint 38 that is combined with the flange member 39b, and is rotatably supported on the bearing holder 70 by the bearing 36. The rotary shaft 39 (the flange member 39b and the shaft 38b of the rotary joint 38) is disposed such that a rotary axis line thereof is aligned with the rotary axis line (= A axis) of the rotary shaft 32 in the leg segment 30a.

The flange member 39b has an end surface 39b1 at a side thereof proximate to the leg segment 30a. The end surface 39b1 is parallel to the end surface 32b of the rotary shaft 32 in the leg segment 30a. The end surface 39b1 has the spindle unit 20 fixed thereto with a plurality of screw members 15 arranged in the circumferential direction. Consequently, in the leg segment 30b, the rotary shaft 39 (the flange member 39b and the shaft 38b of the rotary joint 38) functions as the driven support shaft for supporting the spindle unit 20. An outer peripheral portion of the flange member 39b of the rotary shaft 39 is fixed to a cylindrical braking member 70b so that the braking member 70b rotates together with the rotary shaft 39. Accordingly, the braking member 70b is also part of the driven support shaft.

The clamp mechanism 34 for maintaining the rotational position (angular position) of the spindle unit 20 is mainly constituted by a clamp sleeve 34a. The clamp sleeve 34a includes a cylindrical portion 34a2 having an annular groove 34a1 that forms a pressure chamber, and a flange portion 34a3 extending outward radially from an end of the cylindrical portion 34a2 proximate to the leg segment 30a. The cylindrical portion 34a2 surrounds the braking member 70b in a manner such that the cylindrical portion 34a2 permits rotation of the braking member 70b.

The cylindrical portion 34a2 of the clamp sleeve 34a and the housing 31b have an annular pressure-receiving member 34b interposed therebetween. In detail, the pressure-receiving member 34b is fitted within the through hole 31b1 of the housing 31b. Furthermore, the cylindrical portion 34a2 of the clamp sleeve 34 is fitted within the inner periphery surface of the pressure-receiving member 34b. With screw members fastened to the flange portion 34a3, the clamp mechanism 34 is fixed to the housing 31b, and the pressure-receiving member 34b is fixed to the flange portion 34a3.

The cylindrical portion 34a2 of the clamp sleeve 34a has the annular groove 34a1 which is open towards the pressure-receiving member 34b. The annular groove 34a1 and the inner periphery surface of the pressure-receiving member 34b together form a pressure chamber. This pressure chamber communicates with a fluid channel 34b1 provided in the pressure-receiving member 34b. The fluid channel 34b1 communicates with a fluid channel 31b2 provided in the housing 31b through a fluid channel 34a4 provided in the flange portion 34a3 of the clamp sleeve 34a.

In the clamp mechanism 34, when pressure fluid, such as pressure oil, is supplied to the pressure chamber through these fluid channels, a thin-walled section in the cylindrical portion 34a2 of the clamp sleeve 34a, which corresponds to the annular groove 34a1, becomes deformed inward in the radial direction of the cylindrical portion 34a2. As a result, a clamping force acts on the braking member 70b in the radially-inward direction, whereby a clamped state is attained in which the braking member 70b and the rotary shaft 39 combined therewith are prevented from rotating. When the supply of pressure fluid to the pressure chamber is stopped, the thin-walled section of the cylindrical portion 34a2 becomes released from the deformed state. This eliminates the clamping force acting on the braking member 70b, thereby canceling the clamped state.

The leg segment 30b also contains a rotation detector 41 for detecting the rotational angle of the rotary shaft 39 (i.e. the angular position of the spindle unit 20) and an angle detector 42 for limiting the rotational range of the spindle unit 20.

The rotation detector 41 includes a detector rotor 41b attached to the outer periphery surface of the shaft 38b at a predetermined position and a detector stator 41a attached to the shaft 38b at a position where the detector stator 41a faces the outer surface of the detector rotor 41a. A detection signal detected by the rotation detector 41 that indicates the angular position of the spindle unit 20 is sent to a control apparatus (not shown) of a machine tool in which the machining head 10 according to the present invention is installed. The detection signal is used for rotation control (numerical control) of the spindle unit 20.

The angle detector 42 is defined by, for example, a limit switch. The limit switch 42 is mounted on a support plate provided within the through hole 70a4 of the bearing holder 70 and faces a periphery surface of a disc-shaped member 43 attached to an end of the rotary shaft 39. The periphery surface of the disc-shaped member 43 is provided with a dog that corresponds to a permissible angle range. When the limit switch 42 is opposed to the dog, the limit switch 42 is in an inoperative mode. Consequently, when the spindle unit 20 rotates to exceed a permissible angle due to, for example, control failure, the limit switch 42 detects that condition and sends a detection signal to the control apparatus of the machine tool as, for example, an emergency stoppage signal. The rotation detector of the present invention is not limited to those having the above-described structure, and other common rotation detectors may also be used.

The second support head component 50 in the machining head 10 will be described in detail below.

As mentioned above, in addition to the first support head component 30, the machining head 10 in the first embodiment is equipped with the second support head component 50 that supports the first support head component 30. The first support head component 30 is supported by, for example, a main-shaft head of the machine tool through the second support head component 50. The second support head component 50 is provided for rotating the first support head component 30 around an axis line (axis line parallel to the Z axis of the machine tool, referred to as a C axis hereinafter) extending in the vertical direction (Fig. 3).

As shown in Fig. 3, the second support head component 50 includes a housing 51 as a main body. The housing 51 has a through hole 51a that extends in the C-axis direction.
The second support head component 50 also includes a rotary shaft 52 whose shaft member 52a is disposed within the through hole 51a. The first support head component 30 is combined with the second support head component 50 through the rotary shaft 52. The second support head component 50 is attached to, for example, the main-shaft head of the machine tool through an annular supporter 71 attached to the housing 51.

The second support head component 50 includes a DD motor 53 for rotating the rotary shaft 52, a clamp sleeve 54 for maintaining the rotational position of the rotary shaft 52, and a rotary joint 55 for supplying fluid to the first support head component 30, which are all disposed within the through hole 51a of the housing 51.

The DD motor 53 is constituted by a stator 53a fixed to the housing 51 through a stator sleeve 53c, and a rotor 53b fixed to the rotary shaft 52 at a position facing an inner periphery surface of the stator 53a. An exciting current for driving the DD motor 53 is supplied by means of a cable 17 connected to the DD motor 53 through a connector 17a.

The rotary shaft 52 includes the shaft member 52a disposed rotatably within the through hole 51a of the housing 51, and a flange member 52b attached to an end of the shaft member 52a proximate to the first support head component 30 and extending outward radially in directions perpendicular to the C axis. The rotary shaft 52 has a through hole 52c through which the rotary joint 55 extends.

As shown in the figure, the shaft member 52a and the flange member 52b of the rotary shaft 52 have a bearing housing 52d therebetween. The bearing housing 52d and the housing 51 have a bearing 56 interposed therebetween. With the bearing 56, the rotary shaft 52 is supported in a rotatable fashion with respect to the housing 51. The bearing 56 in Fig. 3 is a triple cylindrical roller bearing (triple roller bearing / axial-radial roller bearing), which is a type of compound-roller pivot bearing, and is capable of receiving large amounts of load in the axial and radial directions.

The rotor 53b of the DD motor 53 is fitted around an outer periphery surface of the shaft member 52a. Thus, when the rotor 53b rotates, the shaft member 52a is rotated about the C axis. The flange member 52b is joined to the shaft member 52a with a plurality of screw members 52e arranged in the circumferential direction and thus rotates together with the shaft member 52a. Furthermore, the flange member 52b has a plurality of screw members 19 fastened thereto in the circumferential direction. With the screw members 19, the supporting segment 30c of the first support head component 30 is joined to the flange member 52b. Accordingly, when the DD motor 53 rotates the rotary shaft 52, the first support head component 30 is rotated together with the rotary shaft 52.

The rotary joint 55 is similar to the rotary joints 37, 38 in the first support head component 30, and includes a distributor 55a fixed to the housing 51 and a shaft 55b rotatably fitted within a through hole 55a1 provided in the distributor 55a.

The distributor 55a is constituted by a cylindrical portion 55a2 disposed within the through hole 52c of the rotary shaft 52 and a flange portion 55a3 extending outward radially from an end of the cylindrical portion 55a2 farthest from the first support head component 30. The flange portion 55a3 of the distributor 55a is joined to the housing 51 with a plurality of screw members arranged in the circumferential direction.

On the other hand, the shaft 55b is joined to a disc-shaped flange member 57 at an end thereof proximate to the first support head component 30. The shaft 55b is joined to the flange member 52b of the rotary shaft 52 through the flange member 57. Consequently, the shaft 55b rotates together with the rotary shaft 52. The flange member 57 has a shape that can be fitted to a circular recess 30c1 provided in the supporting segment 30c of the first support head component 30. With the flange member 57 and the recess 30c1 of the supporting segment 30c, the first support head component 30 and the second support head component 50 can be properly positioned with respect to each other when the two are combined.

The distributor 55a has a plurality of fluid channels 55a4 arranged at different positions in the circumferential direction. The fluid channels 55a4 are provided for taking in fluid from the outside. On the other hand, the shaft 55b also has a plurality of fluid channels 55b1 that correspond to the fluid channels 55a4 of the distributor 55a. Similarly, the fluid channels 55b1 are arranged at different positions in the circumferential direction.

The fluid channels 55a4 and the fluid channels 55b1 corresponding thereto communicate with each other through annular grooves extending around an engagement surface between the distributor 55a and the shaft 55b. This communication state is maintained even upon rotation of the shaft 55b. Furthermore, the fluid channels 55b1 in the shaft 55b communicate with the corresponding fluid channels 37a3 or 38a3 provided in the distributor 37a or 38a of the rotary joint 37 or 38 in the first support head component 30. Accordingly, fluid supplied to the distributor 55a of the rotary joint 55 from the outside is sent to the rotary joints 37 and 38 of the first support head component 30 via the shaft 55b.

The distributor 55a fixed to the housing 51 and the shaft member 52a of the rotary shaft 52 have the clamp sleeve 54 disposed therebetween for maintaining the rotational position of the rotary shaft 52. The clamp sleeve 54 has a flange portion 54a at which the clamp sleeve 54 is joined to the distributor 55a with a plurality of screw members, and is relatively rotatable with the rotary shaft 52. The clamp sleeve 54 has a cylindrical portion 54b provided with an annular groove 54c which is open towards the cylindrical portion 55a2 of the distributor 55a. The annular groove 54c and the outer periphery surface of the cylindrical portion 55a2 of the distributor 55a form a pressure chamber.

When pressure fluid is supplied to the pressure chamber through a fluid channel 54d provided in the distributor 55a, a thin-walled section of the cylindrical portion 54b, which corresponds to the annular groove 54c of the cylindrical portion 54b, becomes deformed outward in the radial direction of the cylindrical portion 54b. As a result, a clamping force acts on the rotary shaft 52 in the radially-outward direction, whereby a clamped state is attained in which the rotary shaft 52 is prevented from rotating.

An upper end portion of the rotary joint 55 is provided with a rotation detector 44 for detecting the amount of rotation of the rotary shaft 52, namely, the amount of rotation of the first support head component 30. The rotation detector 44 includes a pair of detector heads 44a, 44a disposed at predetermined positions on the distributor 55a fixed to the housing 51, and a detector ring 44b which is attached to the shaft 55b rotatable together with the rotary shaft 52 and is disposed facing the inner side of the detector heads 44a, 44a. Similar to the rotation detector 41 in the first support head component 30, a detection signal of the rotation detector 44 is sent to the control apparatus of the machine tool and is used for rotation control of the first support head component 30.

In the machining head 10 having the above-described configuration, the first support head component 30 sandwiches the spindle unit 20 between the two support shafts of the pair of leg segments 30a and 30b so as to securely support the spindle unit 20 in a relatively non-rotatable fashion with respect to the two support shafts. Using the DD motor 33 to rotate the driving support shaft of the leg segment 30a, the spindle unit 20 is rotated about the rotary axis line of the support shafts (i.e. axis line or A axis extending perpendicular to the rotary axis line of the spindle 21) to a desired angular position.

The DD motor 33 is driven in accordance with numerical control based on a preliminarily set program. With rotation control of the rotor 33a, the angular position of the spindle unit 20 is controlled via the driving support shaft. Consequently, the DD motor 33 and the driving support shaft (i.e. the rotary shaft 32 and the shaft 37b) linked with the DD motor 33 within the leg segment 30a function as an index mechanism for the spindle unit 20. An exciting current for driving the DD motor 33 is supplied by means of a cable 16 connected to the DD motor 33 through a connector 16a.

In the first support head component 30 according to the present invention, the bearing 35 that rotatably supports the support shaft (driving support shaft) in the leg segment 30a for the spindle unit 20 is disposed within the DD motor 33 in the radial direction thereof and within the range occupied by the DD motor 33 in the A-axis direction. In addition, the rotary joint 37, which is disposed in the leg segment 30a having the DD motor 33 provided therein and is provided for supplying fluid to the spindle unit 20 for rotation, is disposed within the DD motor 33 in the radial direction thereof. Thus, the bearing 35 and the rotary joint 37 are both housed within a space located within the DD motor 33 in the radial direction thereof, thereby preventing the dimension of the leg segment 30a in the A-axis direction from increasing.

On the other hand, with regard to the leg segment 30b, the dimension thereof in the A-axis direction is determined on the basis of the length (A-axis dimension) of the support shaft (driven support shaft). In view of the balance of load to be imparted upon a machining process, it is preferable that the length of the support shaft in the leg segment 30b be substantially equal to the length of the support shaft in the leg segment 30a. Thus, the A-axis dimension of the leg segment 30b is dependent on that of the leg segment 30a. This implies that the smaller the A-axis dimension of the leg segment 30a, the smaller the A-axis dimension of the leg segment 30b. Consequently, the first support head component 30 can be entirely reduced in dimension in the A-axis direction, whereby a compact machining head 10 can be attained.

In the support head component of the first embodiment, the bearing 35 is disposed radially within the rotor 33a in the DD motor 33 of an inner rotor type, or in other words, within the DD motor 33 in the radial direction. Thus, a bearing with a reduced diameter can be employed. On the other hand, a bearing with a larger diameter can lead to lower run-out accuracy, which is one of the factors that can cause deterioration in the machining accuracy. In contrast, according to the first embodiment, such deterioration in the machining accuracy caused by a bearing with a large diameter is prevented from occurring.

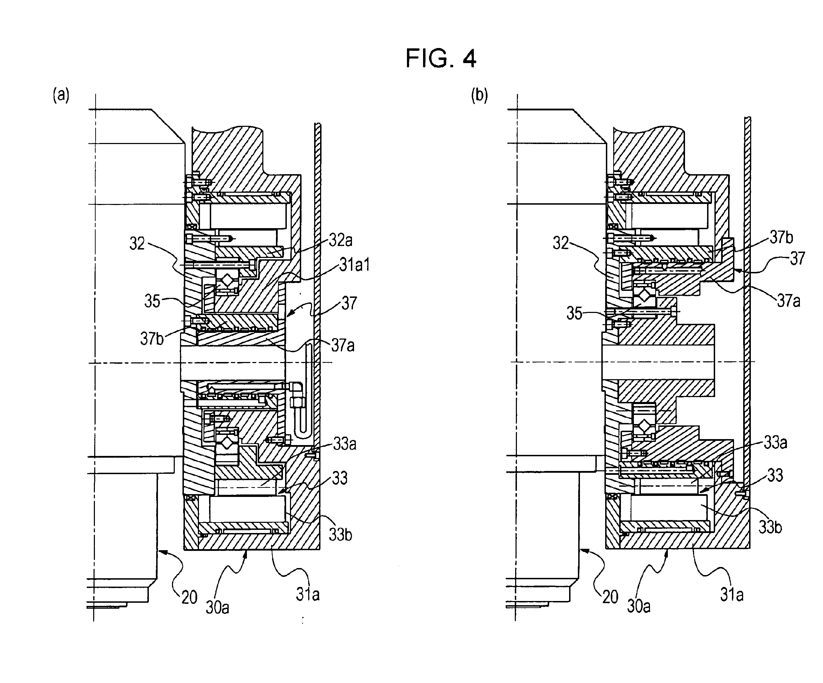

In the first support head component 30 included in the machining head 10 described above, the bearing 35 between the support shaft in the leg segment 30a and the cylindrical portion 31a1 of the housing 31a is disposed between the shaft 37b of the rotary joint 37 and the cylindrical portion 31a1 of the housing 31a. Alternatively, the bearing 35 may be disposed between the cylindrical portion 32a of the rotary shaft 32 and the cylindrical portion 31a1 of the housing 31a, as shown in Fig. 4(a).

Furthermore, in the first support head component 30 of the first embodiment, the rotary joint 37 is located closest to the A axis, and the bearing 35 is fitted around the outer periphery surface of the rotary joint 37 (the shaft 37b). Alternatively, the rotary joint 37 may be provided around the outer periphery surface of the bearing 35, as shown in Fig. 4(b).

Specifically, in the first support head component 30, the support shaft (i.e. the shaft 37b of the rotary joint 37 and the rotary shaft 39) has a large-diameter section around which the rotor 33a of the DD motor 33 is fitted, and a shaft section disposed within this large-diameter section in the radial direction and supported rotatably by the bearing 35. In this case, the large-diameter section is defined by the cylindrical portion 32a of the rotary shaft 32, and the shaft section is defined by the shaft 37b of the rotary joint 37. Alternatively, the large-diameter section may be defined by the shaft 37b of the rotary joint 37, such that the rotor 33a of the DD motor 33 is fitted around the outer periphery surface of the shaft 37b.

Accordingly, in the present invention, as long as the rotary joint is disposed within the DD motor in the radial direction, the positioning of the rotary joint is not limited to within the driving support shaft in the radial direction as in the first embodiment. For example, the rotary joint may be disposed such as to surround the outer periphery surface of the bearing.

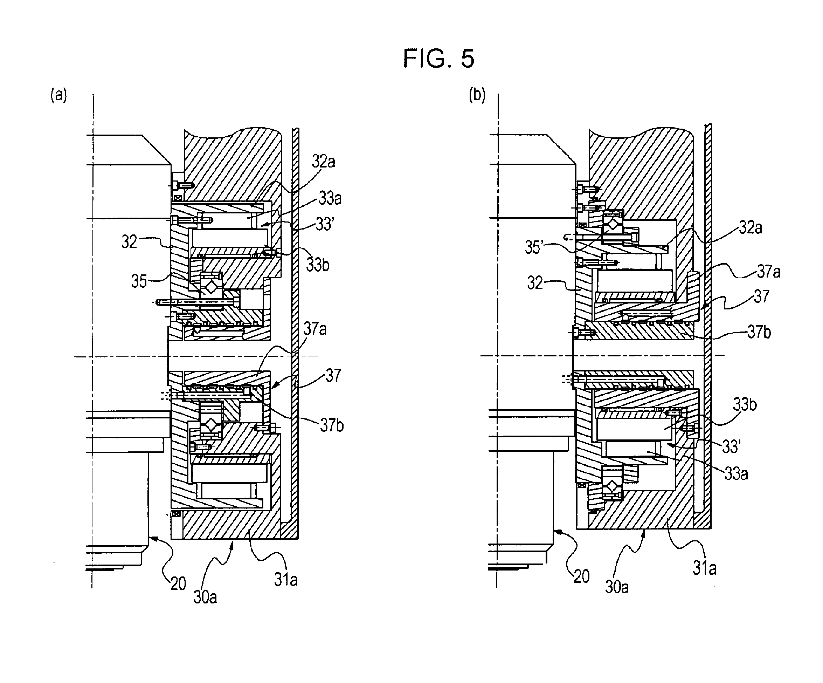

Furthermore, although the DD motor 33 of an inner rotor type, in which the rotor 33a is disposed facing the inner periphery surface of the stator 33b, is used as a drive motor for driving the driving support shaft in the first support head component 30, the drive motor to be used in the present invention is not limited to this type. For example, referring to Fig. 5(a), a drive motor (DD motor 33') of an outer rotor type may be used as an alternative. In this type, the rotor 33a is disposed facing the outer periphery surface of the stator 33b.

Furthermore, although the bearing 35 in the first support head component 30 according to the above description is disposed within the DD motor 33 (33') in the radial direction, the bearing in the present invention is not limited to this configuration. For example, referring to Fig. 5(b), a bearing 35' may have a larger diameter than the DD motor 33', and may be fitted around the outer periphery surface of the cylindrical portion 32a of the rotary shaft 32 that surrounds the outer periphery surface of the DD motor 33'.

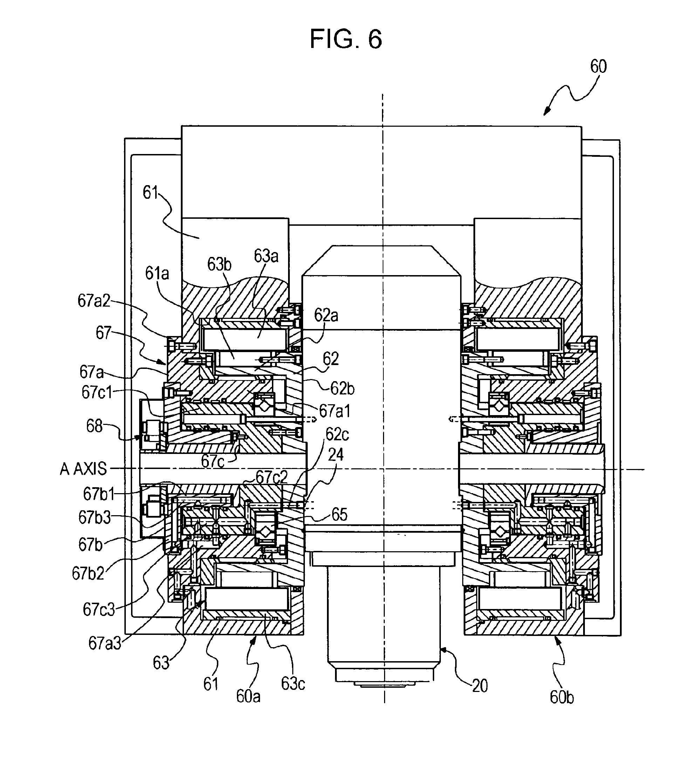

A second embodiment of the present invention will now be described with reference to Fig. 6.

In the support head component (the first support head component 30) of the machining head according to the first embodiment of the present invention, only one of the leg segments of a pair for supporting the spindle unit 20 is provided with an index mechanism (DD motor) for rotating the spindle unit 20. In contrast, the second embodiment shown in Fig. 6 is **characterized in that** both leg segments of the support head component are provided with index mechanisms (DD motors), and that the present invention is applied to both index mechanisms.

The second embodiment shown in Fig. 6 differs from the first embodiment shown in Fig. 1 in that each bearing that rotatably supports the corresponding support shaft rotated by the corresponding DD motor is interposed between the distributor and the shaft that constitute the corresponding rotary joint. In other words, in contrast to the first embodiment in which the rotary joint is disposed within the bearing in the radial direction, each bearing in the second embodiment is disposed within a range occupied by the corresponding rotary joint in the radial direction.

As mentioned above, in a support head component 60 shown in Fig. 6, a pair of leg segments 60a and 60b supporting the spindle unit 20 is both provided with index mechanisms including DD motors 63. The leg segments 60a and 60b in the figure have substantially the same internal configuration. Therefore, the description below will simply be directed to the leg segment 60a, and the description and reference numerals with regard to the leg segment 60b will be omitted.

The leg segment 60a has a housing 61 as a main body. The housing 61 has a through hole 61a that extends in the A-axis direction. The through hole 61a has disposed therein, for example, a DD motor 63, a support shaft that supports the spindle unit 20, a bearing 65 for rotatably supporting the support shaft, and a rotary joint 67. The leg segment 60a is also provided with a rotation detector 68, which is similar to that provided in the first embodiment. The rotation detector 68 is provided only in the leg segment 60a.

In the figure, the rotary joint 67 has a distributor that is constituted by two members 67a and 67b (i.e. first and second distributors). The second distributor 67b has a flange portion 67b2 at which the second distributor 67b is joined to the first distributor 67a. The first distributor 67a has a flange portion 67a2 at which the first distributor 67a is joined to the housing 61. Thus, the first and second distributors 67a, 67b are secured to the housing 61.

The rotary joint 67 has a shaft 67c, which is constituted by a large-diameter section 67c1 rotatably fitted between a cylindrical portion 67a1 of the first distributor 67a and a cylindrical portion 67b1 of the second distributor 67b, and by a shaft section 67c2 around which the bearing 65 is fitted.

In the rotary joint 67, the first and second distributors 67a and 67b are respectively provided with a plurality of fluid channels 67a3 and 67b3. The shaft 67c is provided with a plurality of fluid channels 67c3 in correspondence with the fluid channels 67a3 and 67b3. The fluid channels 67a3 and 67b3 communicate with the fluid channels 67c3 through annular grooves extending around engagement surfaces among the cylindrical portions 67a1 and 67bl of the respective first and second distributors 67a and 67b and the large-diameter section 67c1 of the shaft 67c.

A rotary shaft 62 provided rotatably with respect to the housing 61 is joined to the shaft section 67c2 of the shaft 67c at a side proximate to the leg segment 60b. The rotary shaft 62 has a cylindrical portion 62a that surrounds the cylindrical portion 67a1 of the first distributor 67a included in the rotary joint 67. The rotary shaft 62 also has a plurality of fluid channels 62c that communicate with the fluid channels 67c3 provided in the shaft 67c of the rotary joint 67. Each of the fluid channels 67c3 communicates with the corresponding port 24 of the spindle unit 20 through the corresponding fluid channel 62c.

As shown the figure, the cylindrical portion 67a1 of the first distributor 67a and the shaft section 67c2 of the shaft 67c in the rotary joint 67 fixed to the housing 61 have the bearing 65 interposed therebetween. With the bearing 65, the shaft 67c is supported in a rotatable fashion with respect to the housing 61. The rotary shaft 62 is combined with the shaft 67c, and an end surface 62b of the rotary shaft 62 proximate to the leg segment 60b has the spindle unit 20 attached thereto. Accordingly, the shaft 67c of the rotary joint 67 and the rotary shaft 62 are provided in a rotatable fashion and correspond to a support shaft for supporting the spindle unit 20.

The DD motor 63 is an inner-rotor-type DD motor constituted by a stator 63a secured to the housing 61 through a stator sleeve 63c, and a rotor 63b fitted around an outer periphery surface of the cylindrical portion 62a of the rotary shaft 62 at a position facing an inner periphery surface of the stator 63a.

Accordingly, in the support head component 60 shown in the figure, the rotor 63b of the inner-rotor-type DD motor 63 is fitted around the cylindrical portion 62a of the rotary shaft 62 that surrounds the cylindrical portion 67a1 of the first distributor 67a. On the other hand, the bearing 65 for rotatably supporting the support shaft (i.e. the shaft 67c of the rotary joint 67 and the rotary shaft 62) is interposed between the cylindrical portion 67a1 of the first distributor 67a and the shaft section 67c2 of the shaft 67c disposed within the cylindrical portion 67a1 in the radial direction. In addition, the positioning of the bearing 65 in the A-axis direction is within the range occupied by the DD motor 63 in the A-axis direction, as shown in the figure.

Specifically, similar to the first embodiment, the bearing 65 for rotatably supporting the support shaft rotated by the DD motor 63 is disposed within the DD motor 63 in the radial direction and in the range occupied by the DD motor 63 in the A-axis direction. In addition, the rotary joint 67 is disposed within the DD motor 63 in the radial direction. Consequently, the second embodiment can achieve similar advantages to those achieved in the first embodiment shown in Fig. 1. In particular, like the case of the support head component 60 according to the second embodiment where each of the leg segments 60a and 60b of a pair is provided with an index mechanism including a DD motor 33, the dimension in the A-axis direction can become large as compared with the support head component in the first embodiment shown in Fig. 1. Thus, the present invention is especially effective for a support head component of such a case.

The technical scope of the present invention is not limited to the above embodiments, and modifications are permissible without departing from the scope of the claimed invention.

## Claims

1. A machining head (10) for a machine tool, comprising a spindle unit (20) including a spindle (21) to which a tool is attachable and a support head component (30, 60) that supports the spindle unit (20), the support head component including an index mechanism that rotates the spindle unit (20) at least about an axis line (A axis) extending perpendicular to a rotary axis line of the spindle (21) in order to index an angular position of the spindle unit (20),
wherein the index mechanism includes a support shaft (32, 37b, 62, 67c) fixed to the spindle unit (20) and rotatably supported by a bearing (35, 65) within a housing (31a, 61) of the support head component (30, 60), a drive motor (33, 63) including a motor rotor (33a, 63b) and a motor stator (33b, 63a), the drive motor (33, 63) being disposed concentrically with the support shaft (32, 37b, 62, 67c) and surrounding the support shaft (32, 37b, 62, 67c) within the housing (31a, 61) of the support head component (30, 60), and a rotary joint (37, 67) disposed concentrically with the bearing (35, 65) and the drive motor (33, 63),
wherein the bearing (35, 65) is disposed within a range occupied by the drive motor (33, 63) in an axial direction of the support shaft (32, 37b, 62, 67c), and
wherein the rotary joint (37, 67) is disposed within the drive motor (33, 63) in a radial direction thereof.

2. The machining head (10) according to Claim 1, wherein the bearing (35, 65) is disposed within the motor rotor (33a, 63b) of the drive motor (33, 63) in the radial direction thereof.

3. The machining head (10) according to Claim 2, wherein the rotary joint (37, 67) is disposed within the bearing (35, 65) in a radial direction thereof.
